# EUROPEAN PATENT SPECIFICATION

(11) **EP 0 827 664 B1**
(45) Date of publication and mention of the grant of the patent: **22.02.2006**
(21) Application number: 95943833.4
(22) Date of filing: 15.12.1995
(51) Int. Cl.: H04M 11/00

(54) **METHOD AND APPARATUS FOR INFORMING A USER OF MESSAGE STATUS IN A COMMUNICATION DEVICE**
VERFAHREN UND VORRICHTUNG ZUR INFORMATION ÜBER DEN ZUSTAND EINER ANWENDERNACHRICHT IN EINEM KOMMUNIKATIONSGERÄT
PROCEDE ET APPAREIL POUR INFORMER UN UTILISATEUR DE L'ETAT D'UN MESSAGE DANS UN DISPOSITIF DE COMMUNICATION

(30) Priority: 21.02.1995 US 391735
(43) Date of publication of application: 11.03.1998
(73) Proprietor: MOTOROLA, INC., Schaumburg, IL 60196 (US)
(72) Inventor: EATON, Eric, Thomas, Lake Worth, FL 33467 (US); VON MOCK, Alan, Boynton Beach, FL 33467 (US)
(74) Representative: Cross, Rupert Edward Blount
(86) International application number: PCT/US1995/016385
(87) International publication number: WO 1996/026593

(56) References cited:
- EP-A- 0 508 138
- US-A- 5 307 399
- US-A- 5 311 570
- US-A- 5 315 635
- US-A- 5 327 486
- HUFFMAN A J: "E-MAIL-THE GLUE TO OFFICE AUTOMATION" , IEEE NETWORK, IEEE INC. NEW YORK, US, VOL. 1, NR. 4, PAGE(S) 4-10 XP002042252 ISSN: 0890-8044 * the whole document *

## Description

### Field of the Invention

This invention relates in general to message processing in a communication device, and more specifically to method and apparatus for informing a user of the status of messages received by the communication device.

### Background of the Invention

Conventional communication systems often include communication devices that are used by system users to receive messages. A message transmission device, such as a paging terminal, encodes received information into a radio signal for transmission to a destination communication device, such as a portable transceiver carried by a user. The targeted communication device receives the radio signal and decodes the signal to recover the message information therein. The message information is then stored and displayed to the user. The user can be presented with the message information automatically or in response to user manipulation of controls accessible from the exterior of the communication device.

In one type of prior art communication system, the communication device used by the user for message reception includes a transmitter for transmitting an acknowledge signal back to the message transmission device in response to reception of the message information. In this manner, the message transmission device is notified that the communication device has received the message information. When the acknowledge signal is not received within a predetermined time of message transmission, the message transmission device can retransmit the message to ensure that the communication device receives the message.

In some systems, the communication device can also transmit a "read acknowledge" signal to the message transmission device in response to the presentation of the message by the communication device. Therefore, the message originator can be informed that the user of the communication device has read the message. However, in existing systems that utilize read acknowledge signals, the user of the systems that utilize read acknowledge signals, the user of the communication device has no way of determining which messages will result in generation of a read acknowledge signal upon presentation thereof. In such a system, the user of a communication device can be inconvenienced by having to establish communication, such as by telephone or electronic mail, with all message originators of all presented messages if he wants to make sure that all originators know that the messages have been read.

EP-A-0 508 138 discloses a system for providing notification to a terminal that a mail message has been received and stored in a host computer. In response to the notification, the user can access the host computer using a means other than the terminal and retrieve the mail message. EP-A-0 508 138 does not disclose the presentation of the message on the terminal. Also, EP-A-0 508 138 does not disclose an acknowledgement to the server that the message was presented to the end user.

US 5,307,399 discloses a paging system in which message originators can send "meet me" and "non-meet me" pages. In response to reception of a meet me page, the pager generates a specific alert, such as a preconfigured message. When convenient, the user can then respond to the meet me page by calling the paging system to be connected to the message originator.

Thus, what is needed is a method and apparatus for informing the user of a communication device of the status of received messages.

### Summary of the Invention

In a first aspect, the present invention provides a communication device for receiving a signal in which messages are included, as claimed in claim 1.

In a further aspect, the present invention provides a communication system, as claimed in claim 8.

### Brief Description of the Drawings

FIG. 1 is a diagram of a communication system in accordance with a preferred embodiment of the present invention.
FIG. 2 is a signal diagram of a signal transmitted within the communication system of FIG. 1 in accordance with a preferred embodiment of the present invention.
FIG. 3 is an electrical block diagram of a communication device included in the communication system of FIG. 1 in accordance with a preferred embodiment of the present invention.
FIG. 4 is a flowchart of the operation of a controller included in the communication device of FIG. 3 in accordance with a preferred embodiment of the present invention.
FIG. 5 is a flowchart of the operation of a message status element included in the communication device of FIG. 3 in accordance with a preferred embodiment of the present invention.
FIG. 6 depicts the display of message status information by the communication device of FIG. 3 in accordance with a preferred embodiment of the present invention.
FIG. 7 is an illustration showing the display of message status information by the communication device of FIG. 3 in response to reception of a message requiring a read acknowledge signal in accordance with a preferred embodiment of the present invention.
FIG. 8 is a flowchart of the operation of a presentation element included in the communication device of FIG. 3 in accordance with a preferred embodiment of the present invention.
FIG. 9 is an illustration showing the presentation of a message that does not result in the transmission of a read acknowledge signal by the communication device of FIG. 3 in accordance with a preferred embodiment of the present invention.
FIG. 10 depicts the presentation of a message that results in the transmission of a read acknowledgment signal by the communication device of FIG. 3 in accordance with a preferred embodiment of the present invention.
FIG. 11 is a flowchart depicting the operation of a transmission element included in the communication device of FIG. 3 in accordance with a preferred embodiment of the present invention.

### Description of a Preferred Embodiment

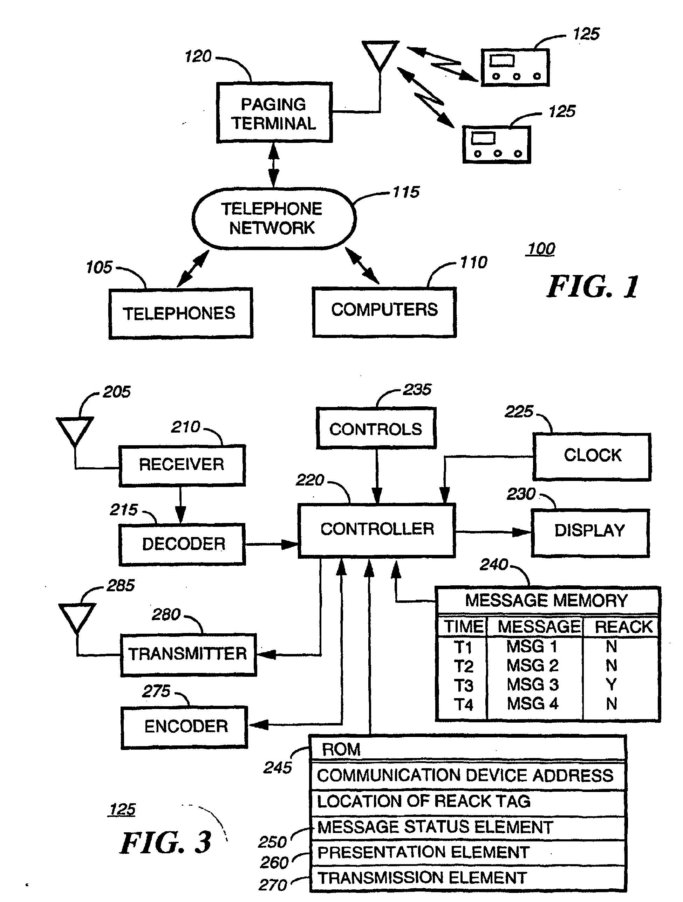

FIG. 1 is a diagram of a communication system in accordance with a preferred embodiment of the present invention. For example purposes only, the communication system 100 is depicted as a radio communication system comprising a message transmission device, such as a paging terminal 120, for generating and transmitting radio signals. It will be appreciated, however, that the communication system 100 could alternatively comprise other types of communication systems, such as computer networks.

The paging terminal 120 preferably includes an input device (not shown) for receiving messages to be transmitted to one or more communication devices, e.g., portable transceivers 125, included within the communication system 100. Additionally, messages can be received from other message input devices, such as telephones 105 or computers 110 coupled to the paging terminal 120 via a telephone network 115.

According to the present invention, the originator of a message can additionally indicate that the message is to be acknowledged by the recipient transceiver 125 in response to presentation of the message by the transceiver 125. In this manner, the message originator can be conveniently informed when the message has been read by the person to whom the message was sent. By way of example, the terminal 120 could be configured such that a message originator could call into the terminal 120 by telephone to get information about whether the transmitted message has been read yet. Alternatively, an operator at the terminal 120 could call the message originator and notify him or her that the message has been read.

FIG. 2 is a diagram of a signal, such as a radio signal, transmitted within the communication system 100 by the paging terminal 120. According to the present invention, a message originator can specify to the paging terminal 120 whether the destination transceiver 125 (FIG. 1) is to send an acknowledge signal back to the terminal 120 in response to the user reading the message. The terminal 120 then collects information including an address indicative of the destination transceiver 125, the message, and, according to the information provided by the originator, a "read acknowledgment" (REACK) tag. For instance, when the portable transceiver 125 is to transmit a REACK, a bit at a predetermined location within the collected information can be set to "one". When, on the other hand, the message originator has not specified that a REACK is to be provided, that bit of the information can be set to "zero". The information collected by the terminal 120 is then encoded into a signalling format, e.g., the POCSAG (Post Office Code Standardization Advisory Group) code or GSC (Golay Sequential Code), and transmitted over the air. The signal transmitted by the paging terminal 120 is received by the portable transceiver 125.

Referring next to FIG. 3, an electrical block diagram of a communication device, such as a portable transceiver 125, is depicted in accordance with the present invention. The transceiver 125 includes a first antenna 205 for receiving transmitted signals and a receiver 210 coupled thereto for demodulating the signal. A decoder 215 coupled to the receiver 210 decodes the demodulated signal to recover the information included therein. The decoded information is then provided to a controller 220, which controls the operation of the transceiver 125. The transceiver 125 further comprises a clock 225 for generating time values, a display 230 for presenting information to the user in a visual manner, and controls 235 accessible to the user from the exterior of the transceiver 125.

According to the present invention, the transceiver 125 in some instances generates a REACK to indicate that a received message has been read by the user. Therefore, the transceiver 125 also includes an encoder 275 for encoding information into a signalling format such as POCSAG and a transmitter 280 for transmitting the encoded information through use of a second antenna 285.

A message memory 240 included in the transceiver 125, is coupled to the controller 220 for storing messages, reception times for such messages, and indications of whether the transceiver 125 is to transmit a REACK when a particular message is presented to the user. The indication in the memory 240 of whether a REACK is to be transmitted for a given message can be, for example, a flag appended to the message or a bit set within a particular location of the memory. For instance, a bit associated with a memory slot wherein a particular message is stored could be set to equal "one" when a REACK is to be sent for that message and set to equal "zero" when no REACK is to be sent.

The transceiver 125 also includes another memory, such as a read only memory (ROM) 245, for storing firmware and subroutines executed by the controller 220 during operation of the transceiver 125. The ROM 245 preferably includes a communication device address and a location in which a REACK tag within information transmitted to the transceiver 125 can be found. The ROM 245 further includes a message status element 250 for storing received messages in the message memory 240 along with the appropriate REACK indication and for providing message status information to the display 230. A presentation element 260 included in the ROM 245 provides not only stored messages to the display 230, but also iconic indications informing the user that the display of a selected message will result in transmission of a REACK. The ROM 245 also stores a transmission element 270 for generating and controlling transmission of a REACK from the transceiver 125.

Although the message status element 250, presentation element 260, and transmission element 270 are depicted and described as firmware within the ROM 245, it will be appreciated that these elements could be implemented through hardware configured to perform equivalent operations as well. It will also be understood by one of ordinary skill that it would be possible for a single antenna to perform the functions of the first and second antennas 205, 285 through utilization of a switch (not shown) to alternate coupling of the single antenna between the receiver 210 and the transmitter 280.

In accordance with the present invention, each message received by the transceiver 125 is tagged in the memory 240 to indicate whether or not a REACK is to be transmitted back to the terminal 120 (FIG. 1) in response to presentation of the message to the user. The transceiver 125 conveniently presents an icon indicative of which messages will result in transmission of a REACK in response to presentation. Therefore, when the user reads a message marked with a REACK icon, he knows that a REACK will be generated and transmitted back to the paging terminal 120 (FIG. 1). The user then does not need to call or otherwise contact the message originator to let the originator know that he has read the message. Conversely, when the user reads a message that is not marked with a REACK icon, he knows that he must personally contact the originator if he wishes to inform the originator that the message has been read.

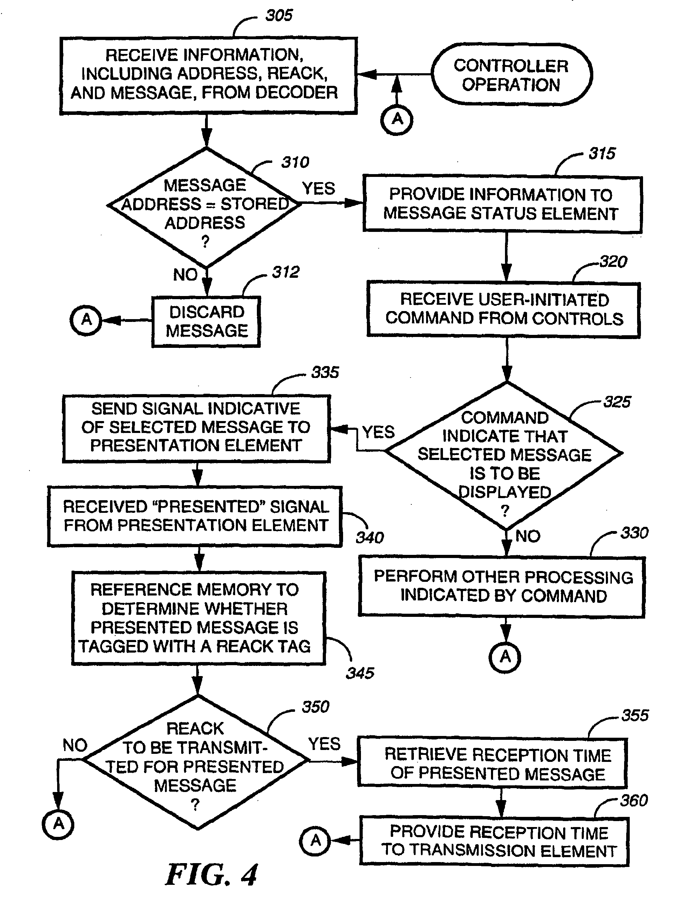

FIG. 4 is a flowchart depicting the operation of the controller 220. According to the present invention, the controller 220 receives, at step 305, information including an address, a REACK tag, and a message. When, at step 310, the message address is not equivalent to the device address stored in the ROM 245, the message is discarded, at step 312. When, at step 310, the message address is equivalent to the stored address, the information received by the controller 220 is provided, at step 315, to the message status element 250 (FIG. 3).

At step 320, the controller 220 receives a user-initiated command from the controls 235. When, at step 325, the command does not indicate that a message is to be displayed, the controller 220 proceeds to perform other processing, at step 330. When, at step 325, the command from the controls 235 indicates that a message is to be displayed, the controller 220 sends, at step 335, a signal indicative of the selected message to the presentation element 260.

In response to reception of a "presented" signal, at step 340, indicating that the selected message has been displayed, the controller 220, at step 345, references the message memory 240 to determine whether the presented message is tagged with a REACK tag indicating that a REACK should be transmitted to acknowledge that the message has been read by the user. When, at step 350, a REACK tag indicates that a REACK should be transmitted, the controller 220 retrieves the reception time of the message from the message memory 240, at step 355. Thereafter, the reception time is provided, at step 360, to the transmission element 270.

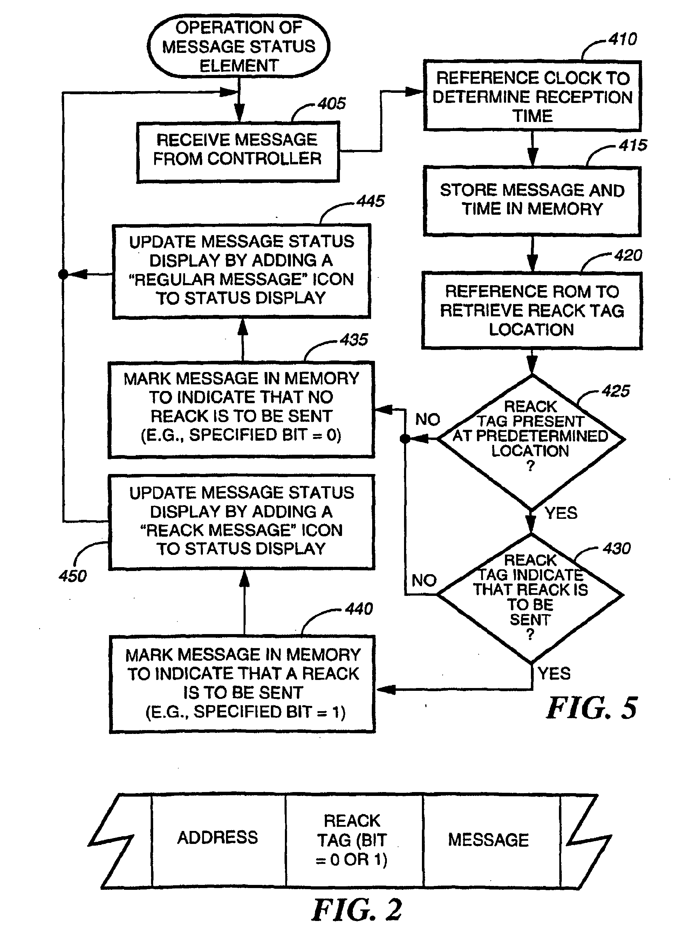

Referring next to FIG. 5, a flowchart illustrates the operation of the message status element 250 (FIG. 3) according to the present invention. At step 405, information, including at least a REACK tag and a message, is received from the controller 220, subsequent to which the clock 225 is referenced, at step 410, to retrieve a time value indicative of reception time of the message. At step 415, the message included in the information and the reception time are stored in the message memory 240.

Thereafter, the ROM 245 is referenced, at step 420, to retrieve the predetermined location of the REACK tag. When, at step 425, the REACK tag is present at the predetermined location, the message status element 250 further determines, at step 430, whether the REACK tag indicates that presentation of the message is to result in transmission of a REACK. When there is no REACK tag present in the message or when the REACK tag indicates that no REACK is to be sent, the message is marked, at step 435, in the message memory 240 to indicate that presentation of the message should not result in transmission of a REACK. The message can be marked, for instance, by setting a memory bit to "zero" or another predetermined value. On the other hand, when the REACK tag indicates that a REACK is to be transmitted, the message, at step 440, is marked, such as by setting a memory bit to "one", to indicate that message presentation should cause transmission of a REACK.

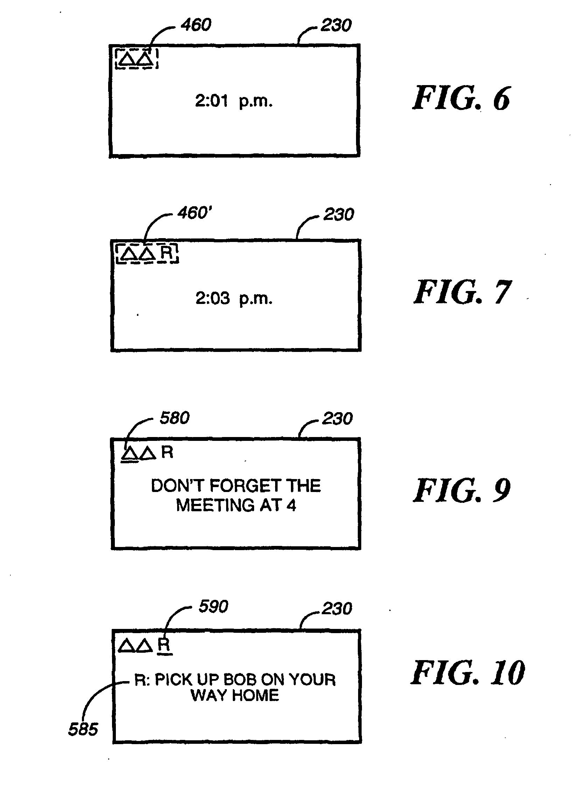

Subsequently, the message status element 250 updates a message status display, as may be better understood with reference to FIGs. 6 and 7. FIG. 6 is an illustration of the presentation of message status information 460 in the upper left-hand corner of the transceiver display 230. As shown in FIG. 6, the message status information 460, e.g., the message status display, indicates to the user that two messages are currently stored in the message memory 240. Each message stored in the memory 240 is represented by a "regular message" icon, e.g., a triangular icon, to inform the user that the messages are "regular" messages, the presentation of which will not result in transmission of a REACK. Therefore, the user is alerted to the fact that, if he wishes the originator to know that he has read one of the regular messages, he must contact the originator.

FIG. 7 depicts the presentation of the message status display 460' after reception of a "REACK message" that will result in a REACK after presentation. In the upper left-hand corner of the display 230, an additional icon has been added to the message status display 460' to inform the user of reception of another message. This icon, however, is shaped differently than those representative of regular messages. By way of example only, the distinct "acknowledgment" icon representative of the received REACK message is displayed as the letter "R". Other icons could alternatively be presented to indicate that a REACK message has been received.

Returning to FIG. 5, the message status element 250 updates, at step 445, the message status display by adding a regular message icon to the status display when a regular message has been received. When, on the other hand, a REACK message has been received, a REACK message icon is added to the message status display, at step 450.

FIG. 8 is a flowchart depicting the operation of the presentation element 260 (FIG. 3). According to the present invention, at step 505, a signal indicative of a selected message is received from the controller 220, subsequent to which the selected message is retrieved, at step 510, from the message memory 240. The message memory 240 is then referenced, at step 515, to determine whether the message is tagged with a REACK tag indicating that a REACK is to be sent. When, at step 520, the message is a regular message for which a REACK is not to be sent, the message is provided to the display 230, at step 525. The display of a regular message may be better understood by referring to FIG. 9. In FIG. 9, the regular message is presented on the display 230. Additionally, the icon 580 representative of the regular message has been marked, such as by underlining, to inform the user which message is being displayed.

Returning to FIG. 8, when, at step 520, the message selected for display is a REACK message, the message along with another "acknowledgment" icon, e.g., a REACK icon, is provided, at step 530, to the display 230, as may be better understood by reference to FIG. 10. FIG. 10 is an illustration of the display 230 when presenting a REACK message to the user. When a REACK message is presented, the predetermined REACK icon 585 is also presented on the display 230 to alert the user to the fact that a REACK transmission will result from display of the message. Additionally, the icon 590 representative of the REACK message in the message status display can be underlined to indicate to the user which message is currently being presented. Although the two icons 585, 590 indicative of the REACK message are depicted in FIG. 10 as being shaped the same, i.e., as the letter "R", it will be appreciated that the two icons could be different from each other and formed in shapes different than the letter "R".

Returning to FIG. 8, the presentation element 260 provides, at step 535, a "presented" signal to the controller 220 after presentation of the selected message on the display 230.

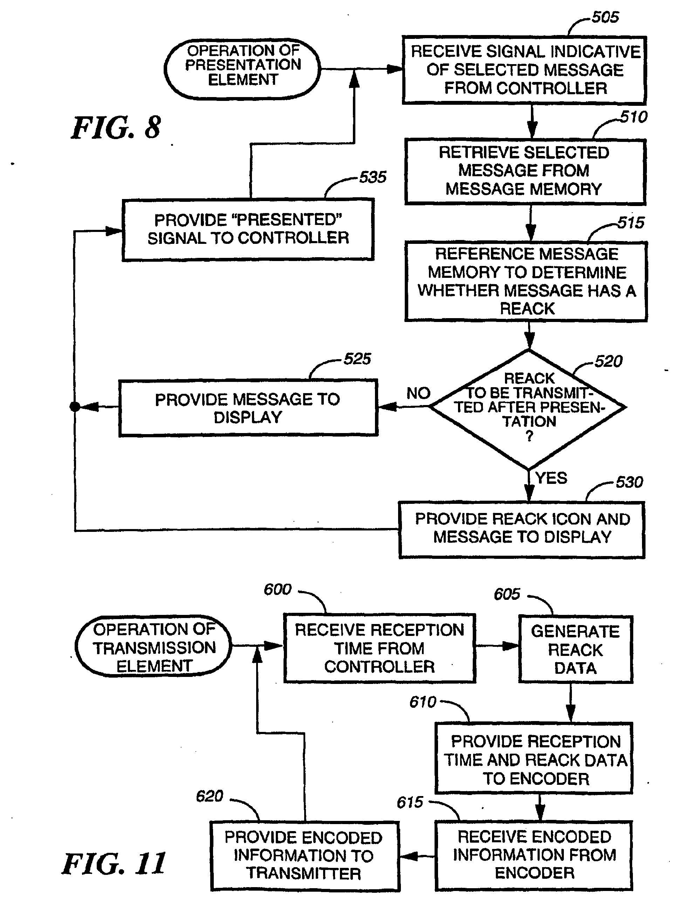

FIG. 11 is a flowchart of the operation of the transmission element 270 included in the transceiver 125. At step 600, the transmission element 270 receives the reception time from the controller 220, after which REACK data is generated, at step 605. The REACK data preferably comprises predetermined data understood by the paging terminal 120 (FIG. 1) to indicate that a REACK message has been presented by the transceiver 125. The reception time and the REACK data are then, at step 610, provided to the encoder 275 for encoding into a signalling format such as POCSAG. The reception time is preferably utilized to identify the message that has been presented to the terminal 120. It will be understood, however, that other methods of identifying the message to the terminal 120 could also be utilized. When, at step 615, the encoded information is received by the transmission element 270, it is provided to the transmitter 280, at step 620, for transmission as a REACK. Thereafter, the terminal 120 receives the REACK and can inform the originator that the message has been read.

In summary, the communication device as described above receives a message that is marked to indicate whether the device is to transmit an acknowledgment back to the terminal after the message has been read. In other words, the message is marked to indicate whether the device is to transmit a read acknowledgment (REACK) upon presentation of the message. When presentation of the message is not to result in a REACK, the message is displayed to the user in a conventional fashion and a message status display indicates to the user that a regular message has been received. Conversely, when presentation of the message is to result in a REACK, the message status display includes a distinctive icon representative of the REACK message. When the user chooses to have the REACK message presented, a REACK icon is displayed along with the message to again alert the user that a REACK will be transmitted to the terminal.

In this manner, the user is advantageously informed of which messages will be acknowledged once they have been presented. Additionally, upon display of a REACK message, the user is alerted that a REACK will be transmitted. Therefore, the user need not waste time attempting to contact the originator of a REACK message to inform him that the message has been read. At the same time, the lack of a REACK icon during the display of a regular message conveniently informs the user that no REACK will be transmitted. As a result, the user knows that he must personally contact the originator if the originator is to be informed that the user has read the message.

It will be appreciated by now that there has been provided a method and apparatus for informing a user of which received messages will result in transmission of a read acknowledgment signal in response to presentation.

## Claims

1. A communication device (125) for receiving a signal in which messages are included, the communication device comprising:
a decoder (215) for recovering a received message from the signal;
a message status element (250) for determining whether the received message is of a first type or a second type of message, wherein transmission of an acknowledgment by the communication device (125) occurs in response to presentation of a message of the first type to the user and without intervention of the user other than that required for presentation of the message of the first type, and wherein transmission of an acknowledgment by the communication device (125) does not occur in response to presentation of a message of the second type; and
a display (230) for visually presenting information to the user of the communication device (125) by which the user is alerted to whether the received message is of the first or the second type, wherein presentation of the information is distinct from presentation of the received message itself.

2. The communication device (125) of claim 1, wherein the information presented to the user comprises message status information that includes icons representative of the messages received by the communication device (125) in the signal but distinct from the messages themselves.

3. The communication device (125) of claim 2, wherein the message status information includes a first icon for each message of the first type received by the communication device (125) and includes a second icon for each message of the second type received by the communication device (125).

4. The communication device (125) of claim 1, further comprising a memory (240) for storing the received message and an indication of whether the received message is of the first or the second type.

5. The communication device (125) of claim 1, further comprising a transmitter (280) for automatically transmitting an acknowledgement in response to the presentation of the received message when the received message is determined to be of the first type by the message status element (250).

6. The communication device (125) of claim 5, further comprising a presentation element (260) for providing, when the received message is of the second type, the received message and a predetermined icon to the display (230), wherein the predetermined icon indicates that the received message is of the second type.

7. The communication device (125) of claim 5, further comprising a presentation element (260) for providing, when the received message is of the first type, the received message and a predetermined icon to the display, wherein the predetermined icon indicates that the received message is of the first type.

8. A communication system (100) for providing signal communication, the communication system (100) comprising:
a message transmission device (120) for receiving a message and information indicating whether presentation of the message is to result in generation of an acknowledgment without user intervention other than that required for presentation of the message, the message transmission device (120) comprising means for transmitting the message and a tag indicative of whether the presentation of the message to the user is to result in the generation of the acknowledgment indicative of the presentation; and
a communication device (125) for receiving the message and the tag and for determining from the tag whether the presentation of the message to the user is to result in the generation of the acknowledgment indicative of the presentation of the message, the communication device (125) comprising:
a display (230) for presenting, when the tag indicates that presentation of the message is to result in the generation of the acknowledgment, a predetermined icon alerting a user of the communication device (125) that the presentation of the message is to result in the generation of the acknowledgment, wherein the predetermined icon is distinct from the message itself; and
a transmission element (270) for generating, when the presentation of the message is to result in the generation of the acknowledgment, the acknowledgment in response to the presentation of the message.

9. The communication system (100) of claim 8, wherein the display (230) presents the predetermined icon prior to the presentation of the message, and wherein the predetermined icon is distinct from other icons presented on the display (230).

10. The communication system (100) of claim 8, wherein the display (230) presents the predetermined icon with the presentation of the message, and wherein the predetermined icon is distinct from other icons presented on the display (230).

## Patentansprüche

1. Kommunikationsgerät (125) zum Empfangen eines Signals, in dem Mitteilungen enthalten sind, wobei das Kommunikationsgerät umfasst:
einen Decodierer (215) zum Wiederherstellen einer empfangenen Mitteilung aus dem Signal;
ein Mitteilungsstatuselement (250) zum Bestimmen, ob die empfangene Mitteilung von einer ersten Art oder einer zweiten Art von Mitteilung ist, wobei eine Versendung einer Bestätigung durch das Kommunikationsgerät (125) als Antwort auf die Präsentation einer Mitteilung der ersten Art für den Benutzer und ohne anderes als das für die Präsentation der Mitteilung des ersten Typs erforderliche Eingreifen des Benutzers auftritt und wobei das Versenden einer Bestätigung durch das Kommunikationsgerät (125) als Antwort auf die Präsentation einer Mitteilung der zweiten Art nicht auftritt; und
eine Anzeige (230) zum visuellen Präsentieren von Information für den Benutzer des Kommunikationsgerätes (125), wodurch der Benutzer darüber alarmiert wird, ob die empfangene Mitteilung von der ersten oder der zweiten Art ist, wobei die Präsentation der Information von der Präsentation der empfangenen Mitteilung selbst verschieden ist.

2. Kommunikationsgerät (125) nach Anspruch 1, wobei die dem Benutzer präsentierte Information Mitteilungsstatusinformation umfasst, die Ikonen enthält, die repräsentativ sind für die durch das Kommunikationsgerät 125 in dem Signal empfangenen Mitteilungen, jedoch verschieden von den Mitteilungen selbst.

3. Kommunikationsgerät (125) nach Anspruch 2, wobei die Mitteilungsstatusinformation eine erste Ikone für jede durch das Kommunikationsgerät (125) empfangene Mitteilung erster Art enthält und eine zweite Ikone für jede durch das Kommunikationsgerät (125) empfangene Mitteilung zweiter Art enthält.

4. Kommunikationsgerät (125) nach Anspruch 1, weiter umfassend einen Speicher (240) zum Speichern der empfangenen Mitteilung sowie eines Hinweises darauf, ob die empfangene Mitteilung von der ersten oder zweiten Art ist.

5. Kommunikationsgerät (125) nach Anspruch 1, weiter umfassend einen Sender (280) zum automatischen Versenden einer Bestätigung als Antwort auf die Präsentation der empfangenen Mitteilung, wenn die empfangene Mitteilung von dem Mitteilungsstatuselement (250) als von der ersten Art bestimmt wurde.

6. Kommunikationsgerät (125) nach Anspruch 5, weiter umfassend ein Präsentationselement (260) zum Bereitstellen der empfangenen Mitteilung sowie einer vorbestimmten Ikone an die Anzeige (230) wenn die empfangene Mitteilung von der zweiten Art ist, wobei die vorbestimmte Ikone anzeigt, dass die empfangene Mitteilung von der zweiten Art ist.

7. Kommunikationsgerät (125) nach Anspruch 5, weiter umfassend, ein Präsentationselement (260) zum Bereitstellen der empfangenen Mitteilung sowie einer vorbestimmten Ikone an die Anzeige, wenn die empfangene Mitteilung von der ersten Art ist, wobei die vorbestimmte Ikone anzeigt, dass die empfangene Mitteilung von der ersten Art ist.

8. Kommunikationssystem (100) zum Bereitstellen von Signalkommunikation, wobei das Kommunikationssystem (100) umfasst:
ein Mitteilungsübertragungsgerät (120) zum Empfangen einer Mitteilung sowie von Information, die darauf hinweist, ob die Präsentation der Mitteilung zur Erzeugung einer Bestätigung ohne anderes Benutzereingreifen als das zur Präsentation der Mitteilung erforderliche führen soll, wobei das Mitteilungsübertragungsgerät (120) Mittel zum Versenden der Mitteilung und einer Markierung umfasst, die darauf hinweist, ob die Präsentation der Mitteilung für den Benutzer zur Erzeugung der Bestätigung, die auf die Präsentation hinweist, führen soll; und
ein Kommunikationsgerät (125) zum Empfangen der Mitteilung und der Markierung und zum Bestimmen, anhand der Markierung, ob die Präsentation der Mitteilung für den Benutzer zur Erzeugung der Bestätigung, die auf die Präsentation der Mitteilung hinweist, führen soll, wobei das Kommunikationsgerät (125) umfasst:
eine Anzeige (230) zum Präsentieren eines vorbestimmten Symbols, das einen Benutzer des Kommunikationsgerätes (125) darüber alarmiert, dass die Präsentation der Mitteilung zur Erzeugung der Bestätigung führen soll, wenn die Markierung darauf hinweist, dass die Präsentation der Mitteilung zur Erzeugung der Bestätigung führen soll, wobei das vorbestimmte Symbol verschieden von der Mitteilung selbst ist; und
ein Sendeelement (270) zum Erzeugen der Bestätigung als Antwort auf die Präsentation der Mitteilung, wenn die Präsentation der Mitteilung zur Erzeugung der Bestätigung führen soll.

9. Kommunikationssystem (100) nach Anspruch 8, wobei die Anzeige (230) das vorbestimmte Symbol vor der Präsentation der Mitteilung präsentiert und wobei das vorbestimmte Symbol verschieden ist von anderen auf der Anzeige (230) präsentierten Symbolen.

10. Kommunikationssystem (100) nach Anspruch 8, wobei die Anzeige (230) das vorbestimmte Symbol mit der Präsentation der Mitteilung präsentiert und wobei das vorbestimmte Symbol verschieden ist von anderen auf der Anzeige (230) präsentierten Symbolen.

## Revendications

1. Dispositif de communication (125) destiné à recevoir un signal dans lequel des messages sont inclus, le dispositif de communication comprenant :
un décodeur (215) servant à récupérer un message reçu depuis le signal ;
un élément d'état de message (250) servant à déterminer si le message reçu est d'un premier ou d'un second type de message, où la transmission d'un accusé réception par le dispositif de communication (125) a lieu en réponse à la présentation d'un message du premier type à l'utilisateur et sans intervention de l'utilisateur autre que celle qui est requise pour la présentation du message du premier type, et où aucune transmission d'un accusé réception par le dispositif de communication (125) n'a lieu en réponse à la présentation d'un message du second type ; et
un dispositif d'affichage (230) servant à présenter visuellement à l'utilisateur du dispositif de communication (125) des informations par lesquelles l'utilisateur est alerté du fait que le message reçu est du premier ou du second type, la présentation des informations étant distincte de la présentation du message reçu lui-même.

2. Dispositif de communication (125) selon la revendication 1, dans lequel les informations présentées à l'utilisateur comprennent des informations d'état du message qui incluent des icônes représentatives des messages reçus par le dispositif de communication (125) dans le signal, mais distinctes des messages eux-mêmes.

3. Dispositif de communication (125) selon la revendication 2, dans lequel les informations d'état du message comprennent une première icône pour chaque message du premier type reçu par le dispositif de communication (125) et comprennent une seconde icône pour chaque message du second type reçu par le dispositif de communication (125).

4. Dispositif de communication (125) selon la revendication 1, comprenant, en outre, une mémoire (240) pour le stockage du message reçu et d'une indication du fait que le message reçu est du premier ou du second type.

5. Dispositif de communication (125) selon la revendication 1, comprenant, en outre, un émetteur (280) pour la transmission automatique d'un accusé réception en réponse à la présentation du message reçu lorsqu'il est déterminé par l'élément d'état de message (250) que le message reçu est du premier type.

6. Dispositif de communication (125) selon la revendication 5, comprenant, en outre, un élément de présentation (260) servant, lorsque le message reçu est du second type, à envoyer le message reçu et une icône prédéterminée au dispositif d'affichage (230), où l'icône prédéterminée indique que le message reçu est du second type.

7. Dispositif de communication (125) selon la revendication 5, comprenant, en outre, un élément de présentation (260) servant, lorsque le message reçu est du premier type, à envoyer le message reçu et une icône prédéterminée au dispositif d'affichage (230), où l'icône prédéterminée indique que le message reçu est du premier type.

8. Système de communication (100) destiné à la communication de signaux, le système de communication (100) comprenant :
un dispositif de transmission de message (120) servant à recevoir un message et des informations indiquant si la présentation du message doit ou non entraîner la génération d'un accusé réception sans intervention de l'utilisateur autre que celle qui est requise pour la présentation du message, le dispositif de transmission de message (120) comprenant des moyens pour transmettre le message ainsi qu'une balise indicative du fait que la présentation du message à l'utilisateur doit entraîner ou non la génération de l'accusé réception indicatif de la présentation ; et
un dispositif de communication (125) servant à recevoir le message et la balise et à déterminer, à partir de la balise, si la présentation du message à l'utilisateur doit ou non entraîner la génération de l'accusé réception indicatif de la présentation du message, le dispositif de communication (125) comprenant :
un dispositif d'affichage (230) servant, lorsque la balise indique que la présentation du message doit entraîner la génération de l'accusé réception, à présenter une icône prédéterminée alertant un utilisateur du dispositif de communication (125) que la présentation du message doit entraîner la génération de l'accusé réception, l'icône prédéterminée étant distincte du message lui-même ; et
un élément de transmission (270) servant, lorsque la présentation du message doit entraîner la génération de l'accusé réception, à générer l'accusé réception en réponse à la présentation du message.

9. Système de communication (100) selon la revendication 8, dans lequel le dispositif d'affichage (230) présente l'icône prédéterminée avant la présentation du message, et dans lequel l'icône prédéterminée est distincte des autres icônes présentées sur le dispositif d'affichage (230).

10. Système de communication (100) selon la revendication 8, dans lequel le dispositif d'affichage (230) présente l'icône prédéterminée avec la présentation du message, et dans lequel l'icône prédéterminée est distincte des autres icônes présentées sur le dispositif d'affichage (230).
